# EUROPÄISCHE PATENTANMELDUNG

(11) **EP 4 420 568 A1**
(43) Veröffentlichungstag der Anmeldung: **28.08.2024**
(21) Anmeldenummer: 24155976.4
(22) Anmeldetag: 06.02.2024
(51) Int. Cl.: A47J 27/00, A47J 36/00, A47J 37/10, G01K 1/14

(54) **GARGESCHIRR**

(30) Priorität: 21.02.2023 BE 202305129
(71) Anmelder: Miele & Cie. KG, 33332 Gütersloh (DE)
(72) Erfinder: Ennen, Volker, 32257 Bünde (DE); Wilkens, Henrik, 49080 Osnabrück (DE); Gehring, Nils Marius, 33739 Bielefeld (DE)

(57) **Zusammenfassung**

Die Erfindung betrifft ein Gargeschirr (2) mit einem Gargeschirrboden (20), welcher ausgebildet ist, mit seiner Außenseite (20a) auf einer Kochstelle (11) eines Kochfelds (1) aufgesetzt und beheizt zu werden, wobei eine Innenwand (20b) des Gargeschirrbodens (20) abschnittsweise einen Garraum (23) des Gargeschirrs (2) bildet. Das Gargeschirr (2) ist dadurch gekennzeichnet, dass der Gargeschirrboden (20) entlang der vertikalen Achse (Z) wenigstens eine Verjüngung (20d) von der Außenseite (20a) zur Innenwand (20b) des Gargeschirrbodens (20) hin aufweist, wobei in der Verjüngung (20d), zur Innenwand (20b) des Gargeschirrbodens (20) hin, wenigstens ein erstes Temperatursensorelement (28a) angeordnet ist, welches ausgebildet ist, eine Temperatur der Innenwand (20b) des Gargeschirrbodens (20) zu erfassen.

## Beschreibung

Die Erfindung betrifft ein Gargeschirr.

Der Trend beim heimischen Kochen geht immer weiter dazu, die Durchführung der Kochprozesse für den Benutzer einfacher, komfortabler und/oder sicherer hinsichtlich des gewünschten Kochergebnisses zu gestalten. Dies kann dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

In jedem Fall ist es allgemein bekannt, dass durch eine trennende Dampfschicht der Wärmeübergang von einer heißen Oberfläche an eine Flüssigkeit und insbesondere an Wasser verschlechtert werden kann. Dieser Zusammenhang wurde z.B. in den 30er Jahren des letzten Jahrhunderts von S. Nukiyama beschrieben. Im Zusammenhang mit der Übertragung von Energie von einem Brennelement an das umgebende Wasser wurde dieser Effekt ausgiebig untersucht.

Dieser Effekt tritt aber nicht nur beim flächigen Filmsieden, sondern auch lokal und temporär beim Blasensieden in dem durch die Blase von der kühlenden Flüssigkeit getrennten Bereich auf. Tailian Chen et al. zeigen in "Subcooled boiling heat transfer and dryout on a constant temperature microheater" im International Journal of Heat and Fluid Flow 25 (2004) Seite 274 - 287, dass die Entstehung und das Ablösen von Dampfblasen auf einem auf einer konstanten Temperatur gehaltenen Substrat zu Schwankungen des lokalen Wärmeflusses vom Substrat in das Wasser führt. Bei einem Substrat mit einer im Sekundenbereich im Wesentlichen konstanten Heizleistung wie z.B. einem Gargeschirr lässt sich dieser Effekt in eine Schwankung der lokalen Temperatur übersetzen.

Somit können je nach Umfang des Siedens unterschiedliche Temperaturschwankungen an einem Gargeschirrboden auftreten. Dies kann sich auf die sensorisch erfasste Temperatur auswirken, d.h. durch die Blasenbildung beim Sieden kann die sensorische Temperaturerfassung beeinträchtigt werden. Dies kann zu falschen Messwerten der Temperatur führen. Gleichzeitig kann dieser Effekt zur Detektion der Blasenbildung herangezogen werden.

Der Erfindung stellt sich somit das Problem, trotz Blasenbildung beim Sieden das Erreichen des Siedepunktes sensorisch erfassen zu können. Vorzugsweise soll ferner die Stärke des Siedens in der Fortkochphase sensorisch erfasst werden können. In jedem Fall soll dies insbesondere möglichst einfach, kostengünstig, bauraumsparend und bzw. oder universell nutzbar erfolgen können.

Erfindungsgemäß wird dieses Problem durch ein Gargeschirr mit den Merkmalen des Anspruchs 1 gelöst. Vorteilhafte Ausgestaltungen und Weiterbildungen der Erfindung ergeben sich aus den nachfolgenden abhängigen Ansprüchen.

Somit betrifft die Erfindung ein Gargeschirr mit einem Gargeschirrboden, welcher ausgebildet ist, mit seiner Außenseite auf einer Kochstelle eines Kochfelds aufgesetzt und beheizt zu werden, wobei eine Innenwand des Gargeschirrbodens abschnittsweise einen Garraum des Gargeschirrs bildet.

Das erfindungsgemäße Gargeschirr ist dadurch gekennzeichnet, dass der Gargeschirrboden entlang der vertikalen Achse wenigstens eine Verjüngung von der Außenseite zur Innenwand des Gargeschirrbodens hin aufweist, wobei in der Verjüngung, zur Innenwand des Gargeschirrbodens hin, wenigstens ein erstes Temperatursensorelement angeordnet ist, welches ausgebildet ist, eine Temperatur der Innenwand des Gargeschirrbodens zu erfassen. Das Temperatursensorelement kann auch als Messfühler bzw. als Temperaturfühler bezeichnet werden. Das Temperatursensorelement stellt den temperatursensitiven Messteil einer Temperaturmesseinrichtung dar, welcher einen Messwert erfassen kann, welcher eine Temperatur repräsentiert.

Der Erfindung liegt dabei die Erkenntnis zugrunde, dass ein erfasster Messwert einer Temperatur des Garraums bzw. des Garguts umso genauer sein kann, desto näher am Garraum bzw. am Gargut die sensorische Erfassung der Temperatur erfolgt. Somit kann die Blasenbildung beim Erreichen der Siedetemperatur besonders effektiv detektiert werden, indem das erste Temperatursensorelement mittels einer Verjüngung des Gargeschirrbodens möglichst nah von außen und/oder von unten an die Innenwand des Gargeschirrbodens herangebracht wird.

Gemäß einem Aspekt der Erfindung wird die Verjüngung des Gargeschirrbodens dadurch gebildet, dass ein Material der Außenseite des Gargeschirrbodens, vorzugsweise ferner ein Material einer wärmeleitenden Zwischenschicht des Gargeschirrbodens, vorzugsweise bis zum Material der Innenwand des Gargeschirrbodens, abgetragen wurde. Dies kann beispielsweise durch Bohren, Fräsen und dergleichen erfolgen. In jedem Fall kann dies eine Möglichkeit darstellen, die Verjüngung zu realisieren.

Gemäß einem weiteren Aspekt der Erfindung wird die Verjüngung des Gargeschirrbodens dadurch gebildet, dass ein Material der Außenseite des Gargeschirrbodens am Material der Innenwand des Gargeschirrbodens anliegt. Dies kann durch Zusammenpressen bzw. durch Stauchen eines entsprechenden Abschnitts des Gargeschirrbodens erfolgen. Hierdurch kann die zuvor beschriebene Verjüngung geschaffen werden, ohne die Außenseite des doppelwandigen Gargeschirrbodens zu öffnen bzw. dessen Material zu durchdringen, so dass die Dichtigkeit einer äußeren Schicht des Gargeschirrbodens erhalten bleiben kann.

Gemäß einem weiteren Aspekt der Erfindung ist die Verjüngung des Gargeschirrbodens von einem Verschlusselement nach außen verschlossen. Dies kann dem Halt und bzw. oder dem Schutz des ersten Temperatursensorelements innerhalb der Verjüngung dienen. Auch kann hierdurch eine fluiddichte Abdichtung des ersten Temperatursensorelements erfolgen.

Gemäß einem weiteren Aspekt der Erfindung ist das Verschlusselement thermisch isolierend ausgebildet. Hierdurch können sonstige Wärmeeinflüsse vom ersten Temperatursensorelement ferngehalten werden, so dass möglichst nur die Temperatur des Gargeschirrbodens an der Stelle des ersten Temperatursensorelements erfasst werden kann.

Gemäß einem weiteren Aspekt der Erfindung ist das Verschlusselement magnetisch isolierend, vorzugsweise als Ferritelement oder als Blech, ausgebildet. Hierdurch können störende elektromagnetische Einflüsse einer induktiven Erhitzung vom ersten Temperatursensorelement ferngehalten werden, welche die sensorische Temperaturerfassung stören könnten.

Gemäß einem weiteren Aspekt der Erfindung ist das Verschlusselement als Kombination aus einem Feststoff und einem initial viskosem Dichtstoff ausgebildet. Dies kann eine wirksame und bzw. oder haltbare Abdichtung ermöglichen.

Gemäß einem weiteren Aspekt der Erfindung weist das Gargeschirr eine Steuerungseinheit auf, welche ausgebildet und eingerichtet ist, aus der erfassten Temperatur des ersten Temperatursensorelements die Temperatur des Gargeschirrbodens zu bestimmen, wobei die Steuerungseinheit entlang der vertikalen Achse zum Gargeschirrboden beabstandet, vorzugsweise in einem Gargeschirrgriff und/oder in einem Zwischenraum zwischen den Schalen eines ganz oder teilweise mehrschaligen Gargefäßes angeordnet ist. Dies kann die Bestimmung der Temperatur des Gargeschirrbodens am Ort des ersten Temperatursensorelements aus dessen erfassten Sensorwert seitens des Gargeschirrs selbst ermöglichen. Dabei die Steuerungseinheit gegenüber dem Gargeschirrboden zu beabstanden kann Einflüsse wie die Erhitzung oder induktive Erwärmung des Gargeschirrbodens von der Steuerungseinheit fernhalten. Durch eine Anordnung in einem Griffelement und/oder hinter einem an der Gargeschirrwandung angebrachten Abdeckelement und/oder in einem Zwischenraum zwischen den Schalen eines ganz oder teilweise mehrschaligen Gargefäßes kann der dort vorhandene Bauraum hierfür genutzt werden.

Gemäß einem weiteren Aspekt der Erfindung ist die Steuerungseinheit mittels wenigstens eines Kabels mit dem ersten Temperatursensorelement signalübertragend verbunden, wobei das Kabel abschnittsweise durch einen horizontalen Kanal, vorzugsweise durch eine horizontale Bohrung des Gargeschirrbodens und/oder zwischen einer Gargeschirrwandung und einem Abdeckelement und/oder durch einen Zwischenraum zwischen den Schalen eines ganz oder teilweise mehrschaligen Gargefäßes verläuft. Dies können konkrete Möglichkeiten der Kabelführung und/oder der kabelgebundenen Verbindung von Steuerungseinheit und erstem Temperatursensorelement sein. Dies kann ebenso für weitere erste Temperatursensorelemente und/oder weitere sonstige Temperatursensorelemente gelten.

Gemäß einem weiteren Aspekt der Erfindung ist das Gargeschirr, vorzugsweise die Steuerungseinheit des Gargeschirrs, ausgebildet und eingerichtet, die bestimmte Temperatur des Gargeschirrbodens drahtlos nach außerhalb zu übertragen. Dies kann die Nutzung dieser Information auch durch andere Geräte wie beispielsweise ein Kochfeld, ein mobiles Endgerät wie beispielsweise eines Smartphones eines Benutzers oder dergleichen ermöglichen.

Gemäß einem weiteren Aspekt der Erfindung sind mehrere erste Temperatursensorelemente entlang des Gargeschirrbodens zueinander beabstandet in jeweils einer Verjüngung des Gargeschirrbodens angeordnet. Dies kann die Messung wie zuvor beschrieben an verschiedenen Stellen des Gargeschirrbodens ermöglichen. Hierdurch kann auch dann eine repräsentative Temperaturerfassung erfolgen, falls der Gargeschirrboden ungleichmäßig erwärmt wird, beispielsweise durch unterschiedliche Spulenabdeckungen auf einem Induktionskochfeld.

Gemäß einem weiteren Aspekt der Erfindung ist das Gargeschirr, vorzugsweise eine Steuerungseinheit des Gargeschirrs, ausgebildet und eingerichtet, die Differenz zwischen den erfassten Temperaturen von wenigstens zwei ersten Temperatursensorelementen zu bestimmen. Somit kann die Bestimmung einer Temperaturdifferenz zwischen den beiden ersten Temperatursensorelementen es auch ermöglichen, aus der Temperaturdifferenz auf eine Blasenbildung zu schließen bzw. um das Maß einer Blasenbildung zu bestimmen.

Gemäß einem weiteren Aspekt der Erfindung weist das Gargeschirr wenigstens ein zweites Temperatursensorelement, vorzugsweise mehrere zweite Temperatursensorelemente, auf, welches entlang der vertikalen Achse an einer Gargeschirrwandung im Bereich des Gargeschirrbodens angeordnet sowie ausgebildet ist, eine Temperatur der Gargeschirrwandung zu erfassen. Dies kann die Erfassung wenigstens eines weiteren Temperaturmesswerts an einer anderen Position bzw. an einer höheren Position entlang der vertikalen Achse ermöglichen. Auch aus dieser Temperaturdifferenz kann auf eine Blasenbildung am ersten Temperatursensorelement geschlossen werden.

Gemäß einem weiteren Aspekt der Erfindung weist das Gargeschirr wenigstens ein drittes Temperatursensorelement, vorzugsweise mehrere dritte Temperatursensorelemente, auf, welches entlang der vertikalen Achse an der Gargeschirrwandung zum Gargeschirrboden beabstandet angeordnet sowie ausgebildet ist, eine weitere Temperatur der Gargeschirrwandung zu erfassen. Dies kann die Erfassung wenigstens eines weiteren dritten Temperaturmesswerts an einer anderen Position bzw. an einer höheren Position entlang der vertikalen Achse ermöglichen. Auch dieser Temperaturmesswert kann zu Vergleichszwecken herangezogen werden.

Gemäß einem weiteren Aspekt der Erfindung weist die Innenwand des Gargeschirrbodens zumindest abschnittsweise im Bereich des ersten Temperatursensorelements eine Oberflächenstrukturierung auf, welche als Kondensationskeim ausgebildet ist. Dies kann die Bildung von Blasen im Bereich des ersten Temperatursensorelements begünstigen.

Mit anderen Worten soll eine Nutzung der Temperaturschwankung durch Bildung und Ablösung von Dampfblasen in einem Gargefäß mit einer erweiterten Elektronik bzw. Sensorikausstattung, insbesondere für klassische Töpfe und zweischalige Töpfe, erfolgen.

Ein Vorteil einer Detektion der Blasenbildung kann es sein, dass der für den Nutzer sichtbare Teil des Siedevorgangs direkt detektiert werden kann. Somit muss die Dampfbildung nicht indirekt über andere Größen wie z.B. eine Temperaturänderung am Topfrand durch aufsteigenden Dampf abgeleitet werden.

Erfindungsgemäß können Sensorelemente unter dem Gargeschirrboden verbunden mit höherliegender Auswerte-/Kommunikationseinheit und optionalen Zusatzsensoren verwendet werden.

Um die Temperaturvariation der Gargeschirrwandung durch die Ablösung von Dampfblasen messen zu können, sollte der temperatursensitive Teil der Temperaturmesseinrichtung in den Bereichen des Gargefäßes liegen, in denen es zu einer Blasenbildung kommt. In der Regel handelt es sich dabei um den Gargeschirrboden bzw. um dessen Außen- bzw. Unterseite bzw. um thermisch gut mit dem Gargeschirrboden verbundene Bereiche der Gargeschirrwandung, welche eine Innen- bzw. Oberseite des Gargeschirrbodens bilden können. In diesen Bereichen des Gargeschirrs können die Bedingungen für eine Auswerteelektronik aufgrund der hohen Temperaturen und bei Induktionskochfeldern der elektromagnetischen Felder der Induktionsspulen sehr ungünstig sein. Daher kann ein Abstand zwischen Messposition im Boden und Einbauposition der Auswerte- und/oder Kommunikationselektronik hilfreich sein. Bevorzugt kann die Elektronik im oberen Drittel der Gargeschirrwandung z.B. im Bereich des Griffs untergebracht werden.

Der Unterschied zu dem klassischen Temperatursensor in einer Bohrung im Boden in Verbindung mit einer Elektronik im Griff ist, dass es sich bisher üblicherweise um eine Bohrung vom Rand in die Mitte bzw. ein in eine Mehrschichtwandung eingebrachtes Röhrchen handelt. Dabei wird nicht unbedingt direkt an der Innenwand gemessen bzw. diese ausgedünnt.

Erfindungsgemäß kann der Temperatursensor gezielt möglichst nah an der Innenwand positioniert werden. Ggf. kann die Innenwand an der Position des Sensors durch eine Bohrung oder Fräsung sogar leicht verdünnt werden. Beispielsweise kann die Umsetzung für einschaliges Gargeschirr erfolgen, indem ein Bohrer mit großem Durchmesser von unten ein Loch in der untersten magnetischen Schicht und dem Heat Spreader erzeugt und ggf. die innere Schicht ausdünnt sowie ein dünner Bohrer von der Seite eine Verbindung von dem Sensorelement zu der höher liegenden Elektronik schafft.

Alternativ oder zusätzlich können erfindungsgemäß mehrere Sensoren verwendet werden. So kommt es insbesondere bei modernen Kochfeldern mit flexibler Positionierungsmöglichkeit des Gargeschirrs auf einer größeren Fläche vor, dass nur ein Teil des Gargeschirrbodens direkt durch darunter befindliche Spulen beheizt wird, während die Erwärmung eines anderen Teils des Gargeschirrbodens auf die Wärmeleitung im Gargeschirrboden zurückzuführen ist. In diesem Fall unterscheidet sich die Blasenbildung in den Bereichen. Dies kann durch zwei oder mehr Sensoren an unterschiedlichen Stellen des Gargeschirrbodens ausgeglichen werden.

Alternativ oder zusätzlich kann erfindungsgemäß eine Differenzmessung erfolgen. Wenn nämlich zwei oder mehr geeignete Temperatursensoren vorhanden sind, welche so weit voneinander entfernt sind, dass eine Dampfblase nicht beide Sensorpositionen gleichzeitig abdeckt, kann eine Messung der Differenztemperatur genutzt werden, um den Einfluss der Dampfblase auf die lokale Temperatur festzustellen.

Alternativ oder zusätzlich kann erfindungsgemäß eine Messung direkt am Rand des Gargeschirrbodens erfolgen. Für die Detektion der Blasenbildung kann einerseits eine ausreichende Energiezufuhr für die Dampferzeugung und andererseits ein Bereich mit einer relativ geringen Wärmekapazität für die Messung der Temperaturschwankung benötigt werden bzw. vorteilhaft sein. Dies kann insbesondere bei einem Gargefäß mit Kapselboden und außen am Kapselboden hochgezogenem magnetischen Blech am äußeren Rand des Kapselbodens gegeben sein. Bei einem hier positionierten Temperatursensor kann auf die Bohrung bzw. Fräsung für die Erstellung eines Temperaturmesspunkts in direkter Nähe zum inneren Blech verzichtet werden bzw. diese kann kleiner ausfallen. Da am Rand im Falle einer nur teilweisen Überdeckung von Spule und Gargeschirr ggf. die Wahrscheinlichkeit, dass erst spät Blasen auftauchen, erhöht ist, ist es in diesem Fall besonders vorteilhaft, wenn Sensoren an mehreren Stellen im Bereich des Bodens angeordnet sind.

Alternativ oder zusätzlich kann erfindungsgemäß eine Beeinflussung der Blasenbildung durch die Oberflächenstruktur der Innenseite des Gargeschirrbodens erfolgen. Diesem Aspekt liegt die Überlegung zugrunde, dass die Blasenbildung durch die Struktur der Oberfläche der Innenseite des Gargeschirrs stark beeinflusst werden kann. Dies kann ausgenutzt werden, indem an der Position eines Temperatursensors oder in seiner direkten Umgebung Strukturen vorhanden sind, welche als Nukleationskeime für die Blasenbildung dienen können. Dabei kann es sich z.B. um Prägungen des Bodens oder eine Variation der Oberfläche durch eine unterschiedliche Nachbehandlung des Blechs im Produktionsprozess handeln.

Alternativ oder zusätzlich kann erfindungsgemäß eine Abdeckung des Sensors durch eine Ferritschicht erfolgen. Wenn ein Teil des Bodens ausgefräst wird, um einen Temperatursensor direkt an der Innenwandung des Gargeschirrs zu ermöglichen und/oder dort aufzunehmen, entfällt dadurch in diesem Bereich die das Magnetfeld der Induktionsspule abschirmende Wirkung des unteren magnetischen Bleches. Dadurch kann das Magnetfeld die Temperaturmessung beeinflussen. Dem kann z.B. durch eine Integration eines Ferritelements oder eines Blechs in die Einrichtung zur Schließung der Bohrung bzw. Fräsung im Gargeschirrboden entgegengewirkt werden.

Alternativ oder zusätzlich kann erfindungsgemäß ein Verschluss des ausgedünnten Bodens durch Kombination aus Feststoff und initial viskosem Dichtstoff erfolgen. Eine feste Abdeckung kann z.B. durch Einschrauben in einem Gewinde im Gargeschirrboden fixiert werden. Dabei kann es zu einer Verdrängung eines zuvor eingefüllten flexiblen Dichtstoffs mit einem Abfluss des flexiblen Materials durch die seitliche Bohrung kommen. Hierdurch kann eine sichere Verfüllung aller Hohlräume durch Dichtstoff und bzw. oder eine Fixierung des festen Verschlusselements durch Verschraubung und Verklebung erreicht werden. Als zusätzliche Option kann ein Verschlusselement eingeschraubt werden, so dass das eingeschraubte Verschlusselement den Temperatursensor gegen die innere Gargeschirrwand klemmen und so einen sicheren Kontakt herstellen kann.

Alternativ oder zusätzlich kann erfindungsgemäß eine Dämmkappe über den Temperatursensor vorgesehen werden. Diesem Aspekt der Erfindung liegt die Erkenntnis zugrunde, dass Stoffe mit hoher Wärmekapazität in direktem Kontakt mit dem Sensor bzw. dem benachbarten Blech der inneren Schale des Gargefäßes die durch die Dampfblasen induzierte Temperaturschwankung dämpfen können. Um dies zu verhindern, kann ein dämmendes Material mit geringer Wärmekapazität in die direkte Umgebung des Sensorelements eingebracht werden.

Zu beachten ist in jedem Fall, die Blasenbildung und Blasen-Ablösung, insbesondere bei starkem Sieden, sehr schnell ablaufen können. Daher kann eine höhere Datenrate bei der Temperaturmessung als bei klassischen Verfahren, welche ein deutlich trägeres Signal des Heat Spreaders verwenden, notwendig bzw. vorteilhaft sein. Dies kann ermöglicht werden, ohne die Kommunikationsschnittstelle z.B. zu einem Kochfeld zu überlasten, wenn eine erste Auswertung und ggf. Kompression durch eine Elektronikeinheit auf den Gargefäß erfolgt und nur vorverarbeitete Daten übertragen werden.

Bei einem doppelwandigen Gargefäß kann auf die seitliche Bohrung für das Kabel und ggf. einen gesonderten Verschluss der ausgedünnten Stelle verzichtet werden.

Wenn eine zusätzliche Bodenplatte unter dem Gargeschirr befestigt werden soll, um z.B. eine Dämmwirkung nach unten zu realisieren oder zusätzliche Elemente wie z.B. Energy Harvesting Spulen unterzubringen, können eingeschraubte und bzw. oder verklebte Abschirmelemente auch für die Befestigung der zusätzlichen Bodenplatte genutzt werden.

Um auf eine Ausfräsung bzw. Bohrung verzichten zu können, kann der ausgedünnte Bereich im Gargefäßboden schon im Fertigungsprozess eingebracht werden. An dieser Stelle kann durch ein geeignetes Werkzeug das magnetische untere Blech so weit eingedrückt werden, dass die Zwischenschicht (üblicherweise Alu bzw. Kupfer als Wärmeleiter) an dieser Stelle deutlich dünner ist als im Durchschnitt des Bodens. Bevorzugt kann das untere Blech so weit eingedrückt, dass es direkten Kontakt zu dem inneren Blech des Gargefäßes hat.

Optional kann das untere Blech vor dem eigentlichen Fügeschritt, in dem die Schichten des Gargeschirrbodens zusammengefügt werden, an dieser Stelle vorgeformt werden. In diesem Fall kann es vorteilhaft sein, wenn die Zwischenschicht aus Aluminium und bzw. oder Kupfer an dieser Stelle ganz oder teilweise ausgedünnt und bzw. oder mit einem Loch versehen ist.

Für das den Sensor in der Vertiefung schützende Element können die oben beschriebenen Optionen wie z.B. magnetisch schirmende oder nicht schirmende Verschlusselemente, eine optionale flexible Vergussmasse, welche auch eine ggf. für die Verbindung des Sensors mit einer z.B. außen am Topfrand oder im Bereich der Griffe angebrachten Elektronikeinheit angebrachte Bohrung verschließen kann, etc. bestehen. Alternativ zu einer Bohrung kann für die Unterbringung des Kabels zwischen Sensor und Elektronikeinheit auch analog zu der Vertiefung für den Sensor eine weitere Vertiefung vorgesehen werden.

In jedem Fall kann vorteilhafter Weise ein direkter Zugriff auf ein Maß für die Blasenbildung und somit auf den für den Nutzer direkt wahrnehmbaren Aspekt des Siedevorgangs erfolgen. Dies kann unabhängig von der Aufstellhöhe erfolgen, da die Blasenbildung direkt und nicht indirekt über einen Temperaturverlauf bestimmt werden kann. Dies kann unabhängig von der Wanderwärmung auf Vollflächenkochfeldern erfolgen, da nur mit Bodensensoren gearbeitet werden kann. Es kann eine Nutzung zusätzlicher Sensorik wie z.B. Temperatursensoren an der Wand oder Vibrationssensorik oder Ultraschallsensoren und dergleichen erfolgen, um weitere Informationen wie z.B. den Füllstand zu erhalten. Es besteht die Möglichkeit, eine Benutzerschnittstelle am Gargeschirr mit der Messtechnikelektronik zu verbinden. Eine Temperaturmessung und davon abgeleitete Funktionen wie eine Warnung bei heißem Topf und dergleichen sind auch neben dem Kochfeld möglich.

Ein Ausführungsbeispiel der Erfindung ist in den Zeichnungen rein schematisch dargestellt und wird nachfolgend näher beschrieben. Es zeigt
- Figur 1: einen perspektivischen Querschnitt durch ein erfindungsgemäßes Gargeschirr;
- Figur 2: einen perspektivischen Querschnitt durch das erfindungsgemäße Gargeschirr auf einem Kochfeld; und
- Figur 3: einen perspektivischen Querschnitt durch eine Detailansicht des erfindungsgemäßen Gargeschirrs.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querrichtung Y bilden gemeinsam die Horizontale X, Y, welche auch als horizontale Ebene X, Y bezeichnet werden kann.

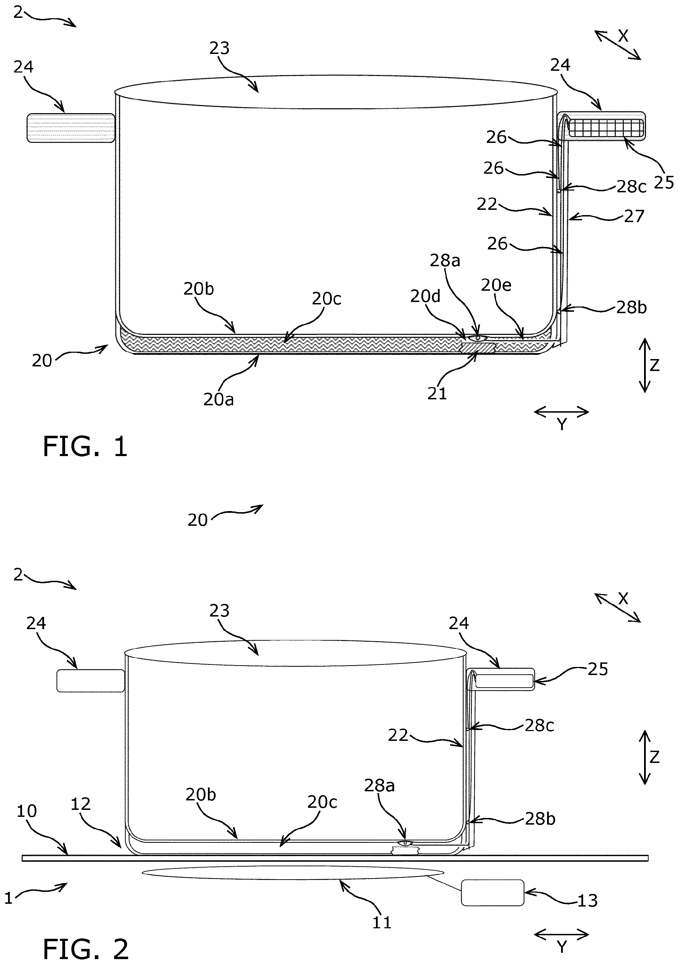

Ein erfindungsgemäßes Gargeschirr 2 wird am Beispiel eines Topfs 2 betrachtet. Der Topf 2 weist einen doppelwandigen Gargeschirrboden 20 mit einer Außenseite 20a bzw. einer Unterseite 20a auf, welche als magnetische Außenschicht ausgebildet ist. Mit der Außenseite 20a seines Gargeschirrbodens 20 kann der Topf 2 zur Durchführung eines Garprozesses auf eine Kochstelle 12 einer Aufstellfläche 10 in Form einer Glaskeramikplatte 10 eines Induktionskochfelds 1 aufgestellt und dort mittels wenigstens einer Induktionsspule 11, betrieben durch dessen Steuerungseinheit 13, induktiv beheizt werden, siehe Figur 2.

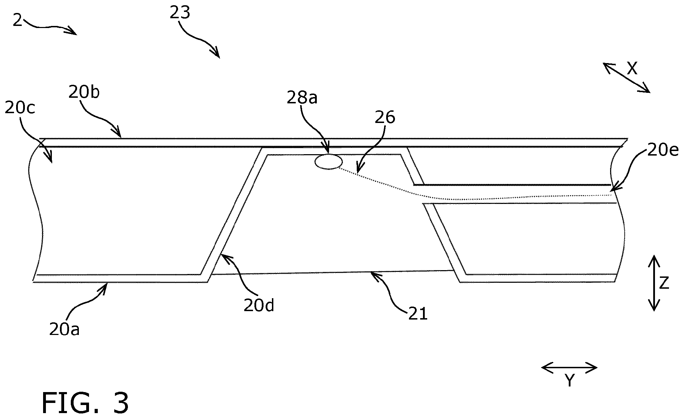

Der Gargeschirrboden 20 des Topfs 2 weist entlang der vertikalen Achse Z gegenüberliegend eine Innenwand 20b auf, welche einstückig mit einer vertikal hochragenden Gargeschirrwandung 22 ausgebildet ist. Die Innenwand 20b des Gargeschirrbodens 20 und die Gargeschirrwandung 22 umschließen gemeinsam den nach oben hin offenen Garraum 23 des Topfs 2. Zwischen der Außenseite 20a des Gargeschirrbodens 20 und der Innenwand 20b des Gargeschirrbodens 20 ist eine wärmeleitende Zwischenschicht 20c vorhanden, siehe Figur 3.

Erfindungsgemäß sind im Gargeschirrboden 20 des Topfs 2 mehrere Verjüngung 20d entlang der vertikalen Achse Z vorgesehen, welche über die Fläche des Gargeschirrbodens 20 möglichst gleichmäßig verteilt sind. Zur Ausbildung der Verjüngungen 20d ist der Gargeschirrboden 20 jeweils dort von unten, d.h. von der Außenseite 20a, derart zusammengedrückt worden, so dass die wärmeleitende Zwischenschicht 20c in diesem Bereich des Gargeschirrbodens 20 verdrängt ist und die Außenseite 20a direkt an der Innenwand 20b anliegt.

In jeder Verjüngung 20d des Gargeschirrbodens 20 ist ein erstes Temperatursensorelement 28a möglichst nah zur Innenwand 20b angeordnet, beispielsweise durch Kleben. Ein Kabel 26 zur datenübertragenden Verbindung des jeweiligen ersten Temperatursensorelements 28a mit einer Steuerungseinheit 25 bzw. Elektronik 25 in einem der beiden Gargeschirrgriffe 24 führt jeweils durch einen horizontalen Kanal 20e in Form einer horizontalen Bohrung 20e des Gargeschirrbodens 20, siehe Figur 3, und dann vertikal weiter zum Gargeschirrgriff 24, von einem Abdeckelement 27 geschützt, siehe Figur 1. Die Verjüngungen 20d werden jeweils von einem thermisch und magnetisch isolierenden Verschlusselement 21 fluiddicht verschlossen.

Entlang der vertikalen Achse Z ist an der Gargeschirrwandung 22 im unteren Bereich nahe des Gargeschirrbodens 20 ein zweites Temperatursensorelement 28b und weiter oben nahe dem Gargeschirrgriff 24 ein drittes Temperatursensorelement 28c angeordnet, welche jeweils ebenfalls mit einem Kabel 26 mit der Steuerungseinheit 25 datenübertragend verbunden sind.

Seitens der Steuerungseinheit 25 können die erfassten Messwerte der mehreren ersten Temperatursensorelemente 28a erhalten und hieraus jeweils der entsprechende Temperaturwert bestimmt werden. Ferner kann durch eine Differenzbildung der verschiedenen ersten Temperaturwerte eine Blasenbildung an einem der ersten Temperatursensorelemente 28a erkannt sowie dessen Maß bestimmt werden.

### Bezugszeichenliste (Bestandteil der Beschreibung)

- X: Längsachse; Tiefe; Länge
- Y: Querachse; Breite
- Z: vertikale Achse; Höhe
- X, Y: Horizontalen; horizontale Ebene

- 1: Induktionskochfeld
- 10: Aufstellfläche; Glaskeramikplatte
- 11: Induktionsspule
- 12: Kochstelle
- 13: Steuerungseinheit

- 2: Gargeschirr; Topf
- 20: Gargeschirrboden
- 20a: Außenseite bzw. Unterseite des Gargeschirrbodens 20
- 20b: Innenwand des Gargeschirrbodens 20
- 20c: wärmeleitende Zwischenschicht des Gargeschirrbodens 20
- 20d: Verjüngung des Gargeschirrbodens 20
- 20e: horizontaler Kanal bzw. horizontale Bohrung des Gargeschirrbodens 20
- 21: Verschlusselement der Verjüngung 20d
- 22: Gargeschirrwandung
- 23: Garraum
- 24: Gargeschirrgriffe
- 25: Steuerungseinheit; Elektronik
- 26: Kabel
- 27: Abdeckelement
- 28a: erstes Temperatursensorelement
- 28b: zweites Temperatursensorelement
- 28c: drittes Temperatursensorelement

## Patentansprüche

1. Gargeschirr (2)
mit einem Gargeschirrboden (20), welcher ausgebildet ist, mit seiner Außenseite (20a) auf einer Kochstelle (11) eines Kochfelds (1) aufgesetzt und beheizt zu werden,
wobei eine Innenwand (20b) des Gargeschirrbodens (20) abschnittsweise einen Garraum (23) des Gargeschirrs (2) bildet,
**dadurch gekennzeichnet, dass**
der Gargeschirrboden (20) entlang der vertikalen Achse (Z) wenigstens eine Verjüngung (20d) von der Außenseite (20a) zur Innenwand (20b) des Gargeschirrbodens (20) hin aufweist,
wobei in der Verjüngung (20d), zur Innenwand (20b) des Gargeschirrbodens (20) hin, wenigstens ein erstes Temperatursensorelement (28a) angeordnet ist, welches ausgebildet ist, eine Temperatur der Innenwand (20b) des Gargeschirrbodens (20) zu erfassen.

2. Gargeschirr (2) nach Anspruch 1,
wobei die Verjüngung (20d) des Gargeschirrbodens (20) dadurch gebildet wird, dass ein Material der Außenseite (20a) des Gargeschirrbodens (20), vorzugsweise ferner ein Material einer wärmeleitenden Zwischenschicht (20c) des Gargeschirrbodens (20), vorzugsweise bis zum Material der Innenwand (20b) des Gargeschirrbodens (20), abgetragen wurde.

3. Gargeschirr (2) nach Anspruch 1,
wobei die Verjüngung (20d) des Gargeschirrbodens (20) dadurch gebildet wird, dass ein Material der Außenseite (20a) des Gargeschirrbodens (20) am Material der Innenwand (20b) des Gargeschirrbodens (20) anliegt.

4. Gargeschirr (2) nach einem der vorangehenden Ansprüche,
wobei die Verjüngung (20d) des Gargeschirrbodens (20) von einem Verschlusselement (21) nach außen verschlossen ist.

5. Gargeschirr (2) nach Anspruch 4,
wobei das Verschlusselement (21) thermisch isolierend ausgebildet ist.

6. Gargeschirr (2) nach Anspruch 4 oder 5,
wobei das Verschlusselement (21) magnetisch isolierend, vorzugsweise als Ferritelement oder als Blech, ausgebildet ist.

7. Gargeschirr (2) nach einem der Ansprüche 4 bis 6,
wobei das Verschlusselement (21) als Kombination aus einem Feststoff und einem initial viskosem Dichtstoff ausgebildet ist.

8. Gargeschirr (2) nach einem der vorangehenden Ansprüche
mit einer Steuerungseinheit (25), welche ausgebildet und eingerichtet ist, aus der erfassten Temperatur des ersten Temperatursensorelements (28a) die Temperatur des Gargeschirrbodens (20) zu bestimmen,
wobei die Steuerungseinheit (25) entlang der vertikalen Achse (Z) zum Gargeschirrboden (20) beabstandet, vorzugsweise in einem Gargeschirrgriff (24), angeordnet ist.

9. Gargeschirr (2) nach Anspruch 8,
wobei die Steuerungseinheit (25) mittels wenigstens eines Kabels (26) mit dem ersten Temperatursensorelement (28a) signalübertragend verbunden ist,
wobei das Kabel (26) abschnittsweise
durch einen horizontalen Kanal (20e), vorzugsweise durch eine horizontale Bohrung (20e), des Gargeschirrbodens (20) und/oder
zwischen einer Gargeschirrwandung (22) und einem Abdeckelement (27)
verläuft.

10. Gargeschirr (2) nach Anspruch 8 oder 9,
wobei das Gargeschirr (2), vorzugsweise die Steuerungseinheit (25) des Gargeschirrs (2), ausgebildet und eingerichtet ist, die bestimmte Temperatur des Gargeschirrbodens (20) drahtlos nach außerhalb zu übertragen.

11. Gargeschirr (2) nach einem der vorangehenden Ansprüche
wobei mehrere erste Temperatursensorelemente (28a) entlang des Gargeschirrbodens (20) zueinander beabstandet in jeweils einer Verjüngung (20d) des Gargeschirrbodens (20) angeordnet sind.

12. Gargeschirr (2) nach Anspruch 11,
wobei das Gargeschirr (2), vorzugsweise eine Steuerungseinheit (25) des Gargeschirrs (2), ausgebildet und eingerichtet ist, die Differenz zwischen den erfassten Temperaturen von wenigstens zwei ersten Temperatursensorelementen (28a) zu bestimmen.

13. Gargeschirr (2) nach einem der vorangehenden Ansprüche
mit wenigstens einem zweiten Temperatursensorelement (28b), vorzugsweise mit mehreren zweiten Temperatursensorelementen (28b), welches entlang der vertikalen Achse (Z) an einer Gargeschirrwandung (22) im Bereich des Gargeschirrbodens (20) angeordnet sowie ausgebildet ist, eine Temperatur der Gargeschirrwandung (22) zu erfassen.

14. Gargeschirr (2) nach Anspruch 13,
mit wenigstens einem dritten Temperatursensorelement (28c), vorzugsweise mit mehreren dritten Temperatursensorelementen (28c), welches entlang der vertikalen Achse (Z) an der Gargeschirrwandung (22) zum Gargeschirrboden (20) beabstandet angeordnet sowie ausgebildet ist, eine weitere Temperatur der Gargeschirrwandung (22) zu erfassen.

15. Gargeschirr (2) nach einem der vorangehenden Ansprüche,
wobei die Innenwand (20b) des Gargeschirrbodens (20) zumindest abschnittsweise im Bereich des ersten Temperatursensorelements (28a) eine Oberflächenstrukturierung aufweist, welche als Kondensationskeim ausgebildet ist.
